# EUROPEAN PATENT SPECIFICATION

(11) **EP 2 426 034 B1**
(45) Date of publication and mention of the grant of the patent: **11.11.2015**
(21) Application number: 11179747.8
(22) Date of filing: 01.09.2011
(51) Int. Cl.: B62D 15/02, G05B 13/04, B60W 30/12, B60W 50/00

(54) **Control system and control method for vehicles**
Steuersystem und Steuerverfahren für Fahrzeuge
Système de contrôle et procédé de contrôle pour véhicules

(30) Priority: 03.09.2010 SE 1050904
(43) Date of publication of application: 07.03.2012
(73) Proprietor: Scania CV AB, 151 87 Södertälje (SE)
(72) Inventor: Andersson, Jon, SE-144 62 Rönninge (SE); Ah-King, Joseph, 151 60 Södertälje (SE)
(74) Representative: Scania CV AB

(56) References cited:
- EP-A1- 1 726 513
- WO-A1-2009/022947
- WO-A1-2010/032556
- DE-A1-102007 061 900
- US-A1- 2004 068 359
- US-A1- 2008 091 318
- US-A1- 2009 319 113

## Description

### Field of the invention

The present invention relates to a control system and a control method for assisting a driver when driving a vehicle, according to the introduction to the independent claims.

### Background to the invention

To reduce the number of traffic accidents caused by drivers being distracted or tired or making an incorrect decision, lane holding systems have been developed to help them keep their vehicle in its traffic lane. Current simple automatic lane holding systems endeavour to keep the vehicle centred in a traffic lane. Such a system keeps track of road markings, e.g. by means of cameras, infrared sensors or radars. The system can then warn the driver when the vehicle is about to leave a lane, and/or may automatically bring the vehicle back to the lane.

More advanced lane holding systems may calculate a desired path for the vehicle. For example, WO 2008/050056 describes a method and a device for estimating a path for a vehicle on the basis of its previous positions.

Another example is described in JP2009012672, comprising a control unit which estimates a future trajectory for the vehicle. The trajectory which the driver then chooses is matched with the estimated future trajectory. A further example is referred to in EP 0927677, which describes a control system with the object of controlling the vehicle so that an optimum position in a traffic lane is achieved, e.g. by using fuzzy regulation.

There are also traffic safety systems which monitor other traffic and assess whether there is risk of exposure to a potential hazard situation. FR 2812413 describes control of a vehicle which comprises automatic risk analysis, and information about the surroundings to provide lateral supervision and prevent the driver from executing dangerous manoeuvres.

It is well known that, when cornering, long vehicle combinations, particularly those which include one or more trailers, "shortcut" bends in such a way that the combination's last axle passes nearer to the origin of the radius of curvature than the first axle did. This entails the risk when cornering that the combination's rear portions may encroach upon neighbouring traffic lanes or ditch edges/road barriers, thereby increasing the risk of an accident, despite the foremost axle having followed the traffic lane in a fully centred way.

WO 2009/022947, considered as the closest prior art, describes a method and a system for supporting a vehicle's lane holding. A future trajectory is calculated for the vehicle to keep within the desired lane. If a trailer is coupled to the vehicle, the desired trajectory may be estimated according to the desired lateral positioning of the trailer.

The object of the invention is to propose an improved lane holding system which enhances primarily the traffic safety of long vehicles and does in particular optimise their lane holding with respect to various criteria.

### Summary of the invention

The object described above is achieved by a control system for a vehicle according to claim 1.

The object is achieved according to another aspect by a control method for a vehicle according to claim 9.

The invention achieves a control system and a control method which can act upon the vehicle with the object of causing it and any trailers coupled to it to stay within a given traffic lane. It is thus possible to avoid the vehicle shortcutting a bend and thereby encroaching upon an adjacent lane or the verge or shoulder of the road. An advantage of this solution is that it provides the driver with effective support during day-to-day driving and has potential for greatly reducing the risk of accidents, since the system itself can ensure that unintended infringements of road lines do not occur.

The desired trajectory may also be calculated with a view as far as possible to maintaining the vehicle's kinetic energy, minimising propellant consumption, minimising the distance travelled, minimising tyre wear or achieving various comfort criteria.

Vehicle means here any desired vehicle, which may also comprise one or more trailers coupled to it.

Preferred embodiments are described in the dependent claims and the detailed description.

### Brief description of the attached drawings

The invention is described below with reference to the attached drawings, in which:
Figure 1 illustrates a control system according to an embodiment of the invention.
Figure 2 depicts an example of a situation where the vehicle shortcuts a bend on the inside of a traffic lane.
Figure 3 depicts an example of a situation where the vehicle shortcuts a bend on the outside of a traffic lane.
Figure 4 is a flowchart for a control method according to an embodiment of the invention.

### Detailed description of preferred embodiments of the invention

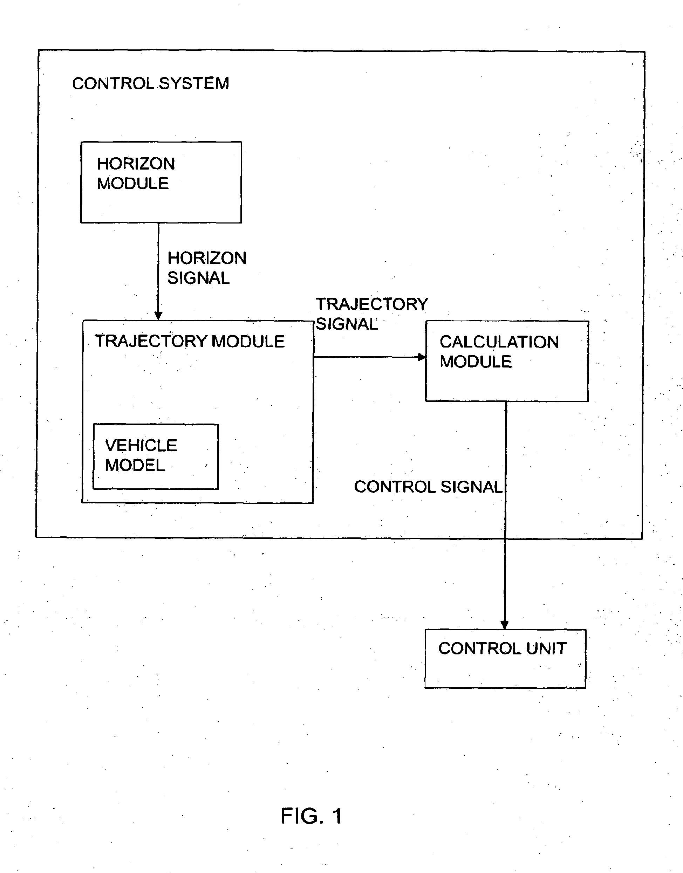

The invention comprises a control system which will now be explained with reference to Figure 1. The control system comprises a horizon module adapted to identifying for the vehicle a future horizon which describes the road on which the vehicle is travelling, and further adapted to generating a horizon signal which indicates said horizon and the vehicle's location. According to an embodiment, the horizon module is adapted to using map data and information about the vehicle's current location to determine a future horizon for the vehicle. There may for example be map data in a map database in the vehicle, and information about the vehicle's current location may be obtained via a positioning unit which uses, for example, GPS (global positioning system). From map data the horizon module may preferably take information about the width of the traffic lane, the radius of curvature of the road and other features of the road. The horizon module may, instead of or in addition to map data, be adapted to using information from at least one sensor which is itself adapted to detecting the vehicle's surroundings, in order to determine a future horizon for the vehicle. Said information may for example comprise the traffic lane's width, radius of curvature etc. Laser scanners and cameras are examples of sensors. According to an embodiment, the horizon module is adapted to generating a horizon signal which also indicates the traffic lane's width and/or radius of curvature. The horizon may be of variable length but is preferably between 5 metres and 2 km.

The control system comprises also a trajectory module comprising a vehicle model which describes the vehicle's dynamic behaviour. The vehicle model may itself comprise a number of smaller models of the vehicle which describe its dynamic behaviour. The trajectory module is further adapted to calculating for the vehicle a future desired trajectory on the basis of said vehicle model and said horizon signal so that at least one driving criterion is fulfilled, and to generating a trajectory signal which indicates said desired trajectory. Examples of driving criteria will be explained in more detail further on. The vehicle model comprises according to an embodiment the vehicle's length, axle configuration and/or articulation configuration. The trajectory module may thus cater for the length of the whole vehicle and how its articulations work when it turns. A desired trajectory is preferably calculated for the vehicle's forward pair of wheels to follow, for at least one driving criterion to be fulfilled.

The control system further comprises a calculation module adapted to comparing the vehicle's state with said desired trajectory and to generating for a control unit in the vehicle, on the basis of said comparison, at least one control signal according to which the vehicle is then regulated. A desired trajectory is thus calculated and is then compared with the vehicle's state. According to an embodiment, said state comprises the turning angle of the vehicle's steering wheel. The calculation module is then preferably adapted to comparing the turning angle of the steering wheel with its desired turning angle according to the desired trajectory, to calculating a difference between the turning angle of the steering wheel and its desired turning angle and to generating for a control unit in the vehicle a control signal which indicates said difference. The calculation module is thus adapted to calculating the turning angle at which the vehicle's steering wheel needs to be for the vehicle to follow the desired trajectory. The control unit is then preferably adapted to regulating the vehicle's steering. According to the invention, the control unit may be adapted to then regulating the vehicle so that it follows the desired trajectory, by adjusting the turning angle of the steering wheel so that the difference between its current turning angle and that according to the desired trajectory disappears wholly or partly. The vehicle's steering may instead be regulated by altering the speed of its wheels. The calculation unit or the control unit is then preferably adapted to calculating the speed at which the respective wheels should run for the vehicle to follow the desired trajectory.

To avoid the system entirely taking over the vehicle's steering, which the driver might find disagreeable, the control unit is adapted according to an embodiment to acting upon the steering wheel in such a way that the driver feels a resistance to its turning in a direction which the system does not wish the vehicle to be steered towards. According to this embodiment, the control unit is adapted to acting upon the steering wheel so that there is little or no resistance to its being turned by the driver so that the vehicle follows the desired trajectory. The steering wheel will therefore tend to turn in the direction which causes the vehicle to follow the desired trajectory. If the driver turns the steering wheel in a wrong direction, i.e. a direction contrary to the desired trajectory, the control unit is adapted to acting upon the steering wheel so that the driver feels in it a resistance to turning in that direction.

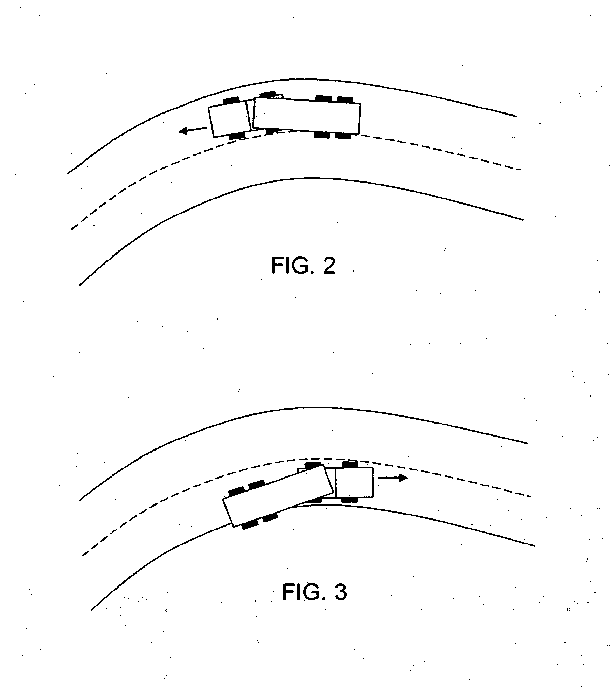

The trajectory module is therefore adapted to calculating for the vehicle a future desired trajectory such that at least one driving criterion is fulfilled. According to an embodiment, a driving criterion comprises keeping the vehicle within a given traffic lane. Figure 2 depicts an example of a situation where the vehicle shortcuts a bend and thereby crosses the centreline, which might cause a dangerous situation, e.g. in relation to a vehicle travelling in the opposite direction. Figure 3 depicts another example of a potentially dangerous situation where the vehicle shortcuts a bend and thereby crosses a sideline. The vehicle might then for example run into pedestrians or other objects on the verge or shoulder of the road. The trajectory module uses the vehicle model and information from the horizon signal, e.g. traffic lane width and radius of curvature, to calculate for the vehicle a desired trajectory along the horizon such that the vehicle is kept within a given traffic lane.

According to an embodiment, the trajectory module is adapted to simulating various trajectories ahead along the horizon at different steering wheel deflections, in order to see where in the traffic lane the vehicle would be at each deflection. The steering wheel deflection and trajectory which result in a desired position in the traffic lane, i.e. the whole vehicle within the lane, are adopted as desired trajectory for the vehicle to be steered with respect to. According to this embodiment, the simulation is preferably conducted continuously, taking the vehicle's current state as starting point. The vehicle's state may for example comprise its location, its relative position in the traffic lane and/or the turning angle of its steering wheel. According to an embodiment, said calculation module is adapted to generating a control signal for influencing the vehicle's lateral position in order to keep it within a given traffic lane. For example, the calculation module may generate a control signal which causes the control unit to act upon the steering wheel so that its deflection becomes the same as that which results in the desired trajectory for the vehicle.

According to an embodiment, if the lane width and the vehicle's relative position in the lane so allow, a more accurate trajectory may be calculated with respect to other driving criteria. According to an embodiment, a driving criterion is to minimise the vehicle's lateral acceleration. According to an embodiment, in same way as described above, various steering wheel deflections are simulated until a desired, e.g. a lowest possible, lateral acceleration is arrived at. The trajectory which results in the desired lateral acceleration is adopted. It is thus possible to reduce the vehicle's tyre wear and enhance the degree of comfort experienced by a driver when driving with the control system.

According to another embodiment, a driving criterion comprises minimising the distance travelled by the vehicle. The desired trajectory at bends is then preferably as near as possible to their inside roadline, provided that the whole vehicle is within a given traffic lane. According to another embodiment, a driving criterion comprises the vehicle maintaining a predetermined speed. The predetermined speed may for example be the same as the speed at which the vehicle enters a bend, or the highest possible speed for the vehicle along the bend, provided that no speed limits are exceeded. A desired trajectory is then calculated for being able to maintain the predetermined speed along the bend without risk of the vehicle overturning or of driver discomfort. In this way the vehicle's kinetic energy can be maintained along the bend. Both of the embodiments described above are intended to reduce propellant consumption during the vehicle's intended journey.

The driving criteria described above may also be combined. For example, the most important driving criterion might be keeping the vehicle within a given traffic lane. Provided that this is fulfilled and that there is room in the respective lane to make further changes to the vehicle's trajectory, the desired trajectory may then be calculated and optimised with respect to criteria other than those mentioned above.

According to an embodiment, the control system is adapted to presenting the calculated desired trajectory on a display in the vehicle, e.g. superimposed on the road ahead. The vehicle's future trajectory at the respective steering wheel deflection may also be presented, enabling the driver to see the trajectory which the system wishes him/her and the vehicle to follow and how close to it the vehicle is. The driver is thus better prepared for how the system and the vehicle will behave, thereby enhancing his/her acceptance of the system. According to another embodiment, the driver or the system may choose the driving criterion or criteria with respect to which the system is to calculate a desired trajectory. The control system may then comprise a setting unit which makes this choice possible. If for example it is desirable to drive economically, criteria which reduce propellant consumption may be chosen. It may also be desirable to use the sole criterion that the vehicle should keep within a given traffic lane.

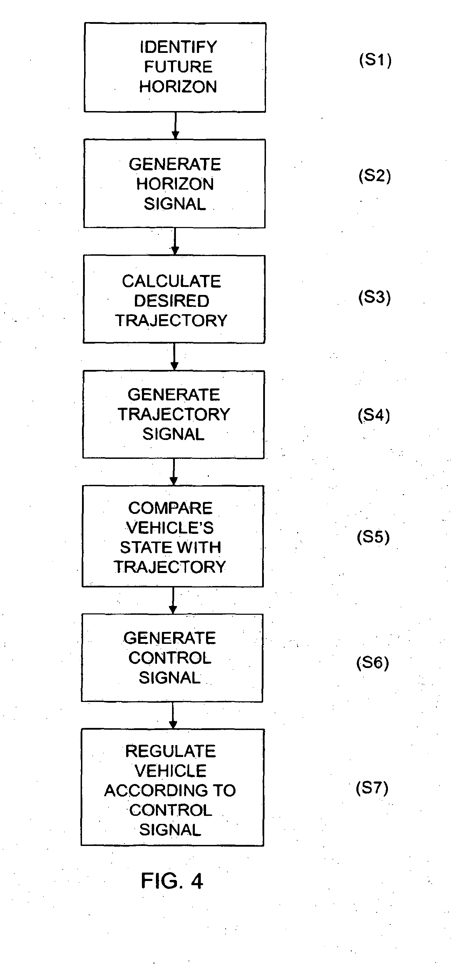

The invention comprises also a control method for a vehicle, which method is illustrated in the flowchart in Figure 4. The method comprises identifying for the vehicle at a first step S1 a future horizon which describes the road on which it is travelling. The next step, S2, generates a horizon signal which indicates said horizon and the vehicle's location. Step S3 calculates for the vehicle a future desired trajectory on the basis of a vehicle model which describes the vehicle's dynamic behaviour and said horizon signal, so that at least one driving criterion is fulfilled. Step S4 then generates a trajectory signal which indicates said desired trajectory. Step S5 compares the vehicle's state with said desired trajectory, and step S6 generates for a control unit in the vehicle, on the basis of said comparison, a control signal according to which the vehicle is regulated at step S7. The method is preferably repeated continuously when the vehicle is in motion, so that it may constantly have a relevant desired trajectory to which to conform and steer.

According to the invention, the method comprises regulating the vehicle's steering. The vehicle's lateral position in the traffic lane can thus be influenced, enabling it to follow the desired calculated trajectory.

According to the invention, said state comprises the turning angle of the vehicle's steering wheel. The method then preferably comprises comparing the turning angle of the steering wheel with that desired according to the desired trajectory, to calculating a difference between the turning angle of the steering wheel and that desired and to generating for said control unit a control signal which indicates said difference. This makes it possible for the vehicle to be caused to follow the desired trajectory or for its steering wheel to be acted upon so that the driver is led to steer the vehicle according to the desired trajectory.

To determine a future horizon for the vehicle, the method according to an embodiment comprises using map data and information about the vehicle's current location to determine a future horizon for it. According to another embodiment, the method comprises using information from at least one sensor adapted to detecting the vehicle's surroundings to determine a future horizon for it.

According to another embodiment, the method comprises generating a horizon signal which also indicates the traffic lane's width and/or radius of curvature. The method may thus obtain information about how much room is available in the traffic lane when a desired trajectory is to be calculated.

The method calculates for the vehicle a future desired trajectory such that at least one driving criterion is fulfilled. According to an embodiment, a driving criterion comprises keeping the vehicle within a given traffic lane. According to an embodiment, the vehicle is kept within a given traffic lane by generating a control signal for influencing its lateral position. According to an embodiment the control signal may be adapted to being sent to a control unit which directly acts upon the vehicle's steering and therefore guides the vehicle along the desired trajectory. According to another embodiment the control signal may be adapted to acting upon the vehicle's steering wheel so that the driver feels a resistance to its turning in a direction which does not lead the vehicle along the desired trajectory.

According to another embodiment, said driving criterion comprises minimising the vehicle's lateral acceleration. This makes it possible for it to be driven in a way which is comfortable for the driver. According to a further embodiment, a driving criterion comprises minimising the distance travelled by the vehicle. This makes it possible for it to be driven in a way which reduces the amount of fuel used. According to another embodiment, a driving criterion comprises the vehicle maintaining a predetermined speed. This makes it possible for its kinetic energy to be maintained. The predetermined speed might for example be a highest possible speed for the vehicle along a bend, or its current speed. It is also possible to calculate a trajectory which fulfils two or more driving criteria, as already explained with reference to the control system. To cause the vehicle to follow the desired trajectory, one or more control signals are preferably generated for a control unit in the vehicle to influence the vehicle's lateral position or give the driver indications, e.g. via the steering wheel, about the direction towards which he/she should steer.

The invention relates also to a computer program product comprising program instructions for enabling a computer system in a vehicle to perform steps according to the method when those instructions are run on said computer system. The invention comprises also a computer program product in which the instructions are stored on a medium which can be read by a computer system.

The present invention is not restricted to the embodiments described above. Sundry alternatives, modifications and equivalents may be used. The above embodiments therefore do not limit the scope of the invention, which is defined by the attached claims.

## Claims

1. A control system for a vehicle comprises:
- a horizon module adapted to identifying for the vehicle a future horizon which describes the road on which it is travelling, and to generating a horizon signal which indicates said horizon and the vehicle's location; **characterised in that** the control system further comprises: - a trajectory module comprising a vehicle model which describes the vehicle's dynamic behaviour, which trajectory module is further adapted to calculating for the vehicle a future desired trajectory on the basis of said vehicle model and said horizon signal so that the vehicle's lateral acceleration is minimised, and to generating a trajectory signal which indicates said desired trajectory;
- a calculation module adapted to comparing the vehicle's state with said desired trajectory, which state comprises the turning angle of the vehicle's steering wheel, and wherein said comparing is adapted to comparing the turning angle of the steering wheel with that desired according to the desired trajectory, to calculating a difference between the turning angle of the steering wheel and that desired and to generating for a control unit in the vehicle, on the basis of said difference a control signal according to which the vehicle's steering is then regulated.

2. A control system according to claim 1, whereby said vehicle model comprises the vehicle's length, axle configuration and/or articulation configuration.

3. A control system according to any one of the foregoing claims, whereby the horizon module is adapted to using map data and information about the vehicle's current location to determine a future horizon for the vehicle.

4. A control system according to any one of the foregoing claims, whereby the horizon module is adapted to using information from at least one sensor adapted to detecting the vehicle's surroundings to determine a future horizon for the vehicle.

5. A control system according to any one of the foregoing claims, whereby the horizon module is adapted to generating a horizon signal which also indicates the traffic lane's width and/or radius of curvature.

6. A control system according to any one of the foregoing claims, whereby a driving criterion comprises keeping the vehicle within a given traffic lane.

7. A control system according to any one of the foregoing claims, whereby a driving criterion comprises minimising the distance travelled by the vehicle.

8. A control system according to any one of the foregoing claims, whereby a driving criterion comprises the vehicle maintaining a predetermined speed.

9. A control method for a vehicle, comprising:
- identifying (S1) for the vehicle a future horizon which describes the road on which it is travelling;
- generating (S2) a horizon signal which indicates said horizon and the vehicle's location; **characterised in**
- calculating (S3) for the vehicle a future desired trajectory on the basis of a vehicle model which describes the vehicle's dynamic behaviour and said horizon signal, so that the vehicle's lateral acceleration is minimised;
- generating (S4) a trajectory signal which indicates said desired trajectory;
- comparing (S5) the vehicle's state, which comprises the turning angle of its steering wheel, with said desired trajectory; and wherein the comparing comprises:
- comparing the turning angle of the steering wheel with that desired according to the desired trajectory;
- calculating a difference between the turning angle of its steering wheel and that desired; and
- generating (S6) for a control unit in the vehicle, on the basis of said difference, a control signal according to which the vehicle's steering is then regulated (S7).

10. A control method according to claim 9, which comprises using map data and information about the vehicle's current location to determine a future horizon for the vehicle.

11. A control method according to any one of claims 9 to 10, which comprises using information from at least one sensor adapted to detecting the vehicle's surroundings to determine a future horizon for the vehicle.

12. A control method according to any one of claims 9 to 11, which comprises generating a horizon signal which also indicates the traffic lane's width and/or radius of curvature.

13. A control method according to any one of claims 9 to 12, whereby a driving criterion comprises keeping the vehicle within a given traffic lane.

14. A control method according to any one of claims 9 to 13, whereby a driving criterion comprises minimising the distance travelled by the vehicle.

15. A control method according to any one of claims 9 to 14, whereby a driving criterion comprises the vehicle maintaining a predetermined speed.

16. A computer program product comprising program instructions for enabling a computer system in a vehicle to perform steps according to the method of any of claims 9 to 15 when those instructions are run on said computer system.

17. A computer program product according to claim 16, in which the program instructions are stored on a medium which can be read by a computer system.

## Patentansprüche

1. Steuersystem für ein Fahrzeug, das umfasst:
- ein Sichtmodul das geeignet ist zum Identifizieren eines zukünftigen Sichtfeldes für das Fahrzeug, welches die Straße beschreibt, auf der das Fahrzeug fährt, und zum Generieren eines Sichtsignals, welches das Sichtfeld und die Fahrzeugposition angibt;
**dadurch gekennzeichnet, dass**
das Steuersystem weiter umfasst:
- ein Bahnmodul, das ein Fahrzeugmodell umfasst, welches das dynamische Verhalten des Fahrzeugs beschreibt, wobei das Bahnmodul zum Berechnen von zukünftigen Sollbahnen ausgebildet ist auf der Grundlage des Fahrzeugmodells und des Sichtsignals, so dass die Querbeschleunigung des Fahrzeugs minimiert wird, und um ein Bahnsignal zu erzeugen, welches die Sollbahn anzeigt;
- ein Berechnungsmodul, das zum Vergleichen des Fahrzeugzustands mit der Sollbahn ausgebildet ist, dessen Zustand den Drehwinkel des Fahrzeuglenkrads umfasst, und wobei das Vergleichen vorgesehen ist für das Vergleichen des Drehwinkels des Lenkrads mit dem Solldrehwinkel gemäß der Sollbahn, um eine Differenz zwischen Drehwinkel des Lenkrads und dem Solldrehwinkel zu berechnen, und zum Erzeugen eines Steuersignals für eine Steuereinheit im Fahrzeug auf Grundlage der Differenz nach deren Maßgabe die Fahrzeuglenkung dann geregelt wird.

2. Steuersystem nach Anspruch 1, wobei das Fahrzeugmodell die Fahrzeuglänge, Achskonfiguration und/oder Achsgelenkkonfiguration umfasst.

3. Steuersystem nach einem der vorangehenden Ansprüche, wobei das Sichtmodul ausgebildet ist zum Nutzen von Kartendaten und Information über die aktuelle Fahrzeugposition um ein zukünftiges Sichtfeld für das Fahrzeug zu bestimmen.

4. Steuersystem nach einem der vorangehenden Ansprüche, wobei das Sichtmodul ausgebildet ist zum Nutzen von Information von mindestens einem Sensor, der eingerichtet ist zum Ermitteln der Fahrzeugumgebung, um ein zukünftiges Sichtfeld für das Fahrzeug zu bestimmen.

5. Steuersystem nach einem der vorangehenden Ansprüche, wobei das Sichtmodul eingerichtet ist zum Erzeugen eines Sichtsignals, das zusätzlich die Breite der Fahrbahn und/oder den Radius der Kurve anzeigt.

6. Steuersystem nach einem der vorangehenden Ansprüche, wobei ein Fahrkriterium das Halten des Fahrzeugs auf der Fahrbahn umfasst.

7. Steuersystem nach einem der vorangehenden Ansprüche, wobei ein Fahrkriterium das Minimieren der gefahrenen Strecke des Autos umfasst.

8. Steuersystem nach einem der vorangehenden Ansprüche, wobei ein Fahrkriterium das Einhalten einer vordefinierten Geschwindigkeit des Autos umfasst.

9. Steuerverfahren für ein Fahrzeug, das umfasst:
- Identifizieren (S1) eines zukünftigen Sichtfelds für das Fahrzeug, das die Straße, auf welchem sich das Fahrzeug bewegt, beschreibt;
- Erzeugen (S2) eines Sichtsignals zum Anzeigen des Sichtfelds und der Fahrzeugposition;
**gekennzeichnet durch**
- Berechnen (S3) der zukünftigen Sollbahn des Fahrzeugs auf der Grundlage eines Fahrzeugmodells, welches das dynamische Verhalten des Fahrzeugs und das Sichtsignal beschreibt, so dass die Querbeschleunigung des Fahrzeugs minimiert wird;
- Erzeugen (S4) eines Bahnsignals, das die Sollbahn anzeigt;
- Vergleichen (S5) des Fahrzeugzustands, der die Drehwinkel des Lenkrads mit der Sollbahn umfasst; und wobei das Vergleichen umfasst:
- Vergleichen des Drehwinkels des Lenkrads mit dem Solldrehwinkel nach Maßgabe der Sollbahn;
- Berechnen einer Differenz zwischen Drehwinkel des Lenkrads und dem Solldrehwinkel; und
- Erzeugen (S6) eines Steuersignals für eine Steuereinheit im Fahrzeug auf der Grundlage der Differenz nach deren Maßgabe die Fahrzeuglenkung dann geregelt wird (S7).

10. Steuerverfahren nach Anspruch 9, das Kartendaten und Information über die aktuelle Fahrzeugposition umfasst, um ein zukünftiges Sichtfeld für das Fahrzeug zu bestimmen.

11. Steuerverfahren nach einem der Ansprüche 9 bis 10, welches das Benutzen von Information von mindestens einem Sensor umfasst, der ausgebildet ist zum Entdecken der Fahrzeugumgebung zum Bestimmen eines zukünftigen Sichtfelds des Fahrzeugs.

12. Steuerverfahren nach einem der Ansprüche 9 bis 11, welches das Generieren eines Sichtsignals umfasst, das auch Fahrbahnbreite und/oder Kurvenradius anzeigt.

13. Steuerverfahren nach einem der Ansprüche 9 bis 12, wobei ein Fahrkriterium umfasst, das Fahrzeug innerhalb einer vorgegebenen Spur zu halten.

14. Steuerverfahren nach einem der Ansprüche 9 bis 13, wobei ein Fahrkriterium umfasst, die gefahrene Strecke des Fahrzeugs zu minimieren.

15. Steuerverfahren nach einem der Ansprüche 9 bis 14, wobei ein Fahrkriterium umfasst, eine vorgegebene Geschwindigkeit des Fahrzeugs zu halten.

16. Computerprogrammprodukt, umfassend Programmanweisungen zum Aktivieren eines Computersystems in einem Fahrzeug zum Durchführen von Schritten nach dem Verfahren einer der Ansprüche 9 bis 15, wenn die Anweisungen auf dem Computersystem laufen.

17. Computerprogrammprodukt nach Anspruch 16, in dem die Programmanweisungen auf einem Medium gespeichert sind, welches von einem Computersystem gelesen werden kann.

## Revendications

1. Système de commande pour un véhicule, comprenant :
- un module d'horizon adapté pour identifier pour le véhicule un horizon futur qui décrit la route sur laquelle il se déplace, et pour générer un signal d'horizon qui indique ledit horizon et l'emplacement du véhicule, **caractérisé en ce que** le système de commande comprend en outre :
- un module de trajectoire comprenant un modèle de véhicule qui décrit le comportement dynamique du véhicule, lequel module de trajectoire est en outre adapté pour calculer pour le véhicule une trajectoire future souhaitée à partir dudit modèle de véhicule et dudit signal d'horizon de telle sorte que l'accélération latérale du véhicule soit minimisée, et pour générer un signal de trajectoire qui indique ladite trajectoire souhaitée ;
- un module de calcul adapté pour comparer l'état du véhicule à ladite trajectoire souhaitée, lequel état comprend l'angle de rotation du volant de direction du véhicule, et dans lequel ladite comparaison est adaptée pour comparer l'angle de rotation du volant de direction à celui qui est souhaité selon la trajectoire souhaitée, pour calculer une différence entre l'angle de rotation du volant de direction et celui qui est souhaité et pour générer pour une unité de commande présente dans le véhicule, à partir de ladite différence, un signal de commande selon lequel la direction du véhicule est ensuite régulée.

2. Système de commande selon la revendication 1, dans lequel ledit modèle de véhicule comprend la longueur, la configuration d'essieu et/ou la configuration d'articulation du véhicule.

3. Système de commande selon l'une quelconque des revendications précédentes, dans lequel le module d'horizon est adapté pour utiliser des données de cartographie et des informations concernant la localisation courante du véhicule pour déterminer un horizon futur pour le véhicule.

4. Système de commande selon l'une quelconque des revendications précédentes, dans lequel le module d'horizon est adapté pour utiliser des informations provenant d'au moins un capteur adapté pour détecter l'environnement du véhicule pour déterminer un horizon futur pour le véhicule.

5. Système de commande selon l'une quelconque des revendications précédentes, dans lequel le module d'horizon est adapté pour générer un signal d'horizon qui indique également la largeur et/ou le rayon de courbure de la voie de circulation.

6. Système de commande selon l'une quelconque des revendications précédentes, dans lequel un critère de conduite comprend le maintien du véhicule sur une voie de circulation donnée.

7. Système de commande selon l'une quelconque des revendications précédentes, dans lequel un critère de conduite comprend la minimisation de la distance parcourue par le véhicule.

8. Système de commande selon l'une quelconque des revendications précédentes, dans lequel un critère de conduite comprend le maintien du véhicule à une vitesse prédéterminée.

9. Procédé de commande d'un véhicule, comprenant :
- l'identification (S1) pour le véhicule d'un horizon futur qui décrit la route sur laquelle il se déplace ;
- la génération (S2) d'un signal d'horizon qui indique ledit horizon et la localisation du véhicule, **caractérisé par** :
- le calcul (S3) pour le véhicule d'une trajectoire future souhaitée à partir d'un modèle de véhicule qui décrit le comportement dynamique du véhicule et dudit signal d'horizon, de telle sorte que l'accélération latéral du véhicule soit minimisée ;
- la génération (S4) d'un signal de trajectoire qui indique ladite trajectoire souhaitée ;
- la comparaison (S5) de l'état du véhicule, qui comprend l'angle de rotation de son volant de direction, à ladite trajectoire souhaitée ; et dans lequel la comparaison comprend :
- la comparaison de l'angle de rotation du volant de direction à celui qui est souhaité selon la trajectoire souhaitée ;
- le calcul d'une différence entre l'angle de rotation de son volant de direction et celui qui est souhaité ; et
- la génération (S6), pour une unité de commande présente dans le véhicule, à partir de ladite différence, d'un signal de commande selon lequel la direction du véhicule est ensuite régulée (S7).

10. Procédé de commande selon la revendication 9, qui comprend l'utilisation de données de cartographie et d'informations concernant la localisation courante du véhicule pour déterminer un horizon futur pour le véhicule.

11. Procédé de commande selon l'une quelconque des revendications 9 à 10, qui comprend l'utilisation d'informations provenant d'au moins un capteur adapté pour détecter l'environnement du véhicule pour déterminer un horizon futur pour le véhicule.

12. Procédé de commande selon l'une quelconque des revendications 9 à 11, qui comprend la génération d'un signal d'horizon qui indique également la largeur et/ou le rayon de courbure de la voie de circulation.

13. Procédé de commande selon l'une quelconque des revendications 9 à 12, dans lequel un critère de conduite comprend le maintien du véhicule sur une voie de circulation donnée.

14. Procédé de commande selon l'une quelconque des revendications 9 à 13, dans lequel un critère de conduite comprend la minimisation de la distance parcourue par le véhicule.

15. Procédé de commande selon l'une quelconque des revendications 9 à 14, dans lequel un critère de conduite comprend le maintien du véhicule à une vitesse prédéterminée.

16. Produit de programme informatique comprenant des instructions de programme pour permettre à un système informatique présent dans un véhicule d'exécuter des étapes du procédé selon l'une quelconque des revendications 9 à 15 lorsque ces instructions sont exécutées sur ledit système informatique.

17. Produit de programme informatique selon la revendication 16, dans lequel les instructions de programme sont stockées sur un support qui peut être lu par un système informatique.
